# EUROPÄISCHE PATENTSCHRIFT

(11) **EP 1 574 318 B1**
(45) Veröffentlichungstag und Bekanntmachung des Hinweises auf die Patenterteilung: **11.04.2007**
(21) Anmeldenummer: 05000443.1
(22) Anmeldetag: 12.01.2005
(51) Int. Cl.: B29C 49/12, B29C 49/78, B29C 49/58, B29C 49/06

(54) **Verfahren und Vorrichtung zur Blasformung von Behältern**
Method and apparatus for blow moulding containers
Procédé et appareil de formage de récipients par soufflage

(30) Priorität: 12.03.2004 DE 102004012124
(43) Veröffentlichungstag der Anmeldung: 14.09.2005
(73) Patentinhaber: SIG Technology Ltd., 8212 Neuhausen Rhine Falls (CH)
(72) Erfinder: Baumgarte, Rolf, 22926 Ahrensburg (DE)
(74) Vertreter: Klickow, Hans-Henning

(56) Entgegenhaltungen:
- EP-A- 0 499 136
- GB-A- 1 545 799
- US-A- 4 372 910
- US-B1- 6 186 760

## Beschreibung

Die Erfindung betrifft ein Verfahren zur Blasformung von Behältern, bei dem ein Vorformling aus einem thermoplastischen Material nach einer thermischen Konditionierung innerhalb einer Blasform von einer Reckstange gereckt und durch Blasdruckeinwirkung in den Behälter umgeformt wird.

Die Erfindung betrifft darüber hinaus eine Vorrichtung zur Blasformung von Behältern aus einem thermoplastischen Material, die mindestens eine mit einer Blasform versehene Blasstation aufweist und die mit einer Reckeinrichtung versehen ist, in deren Bereich eine Reckstange zur Beaufschlagung eines in die Blasform einsetzbaren Vorformlings angeordnet ist und bei der die Reckstange mit einer Hubsteuerung für die Durchführung einer Bewegungskoordinierung der Reckstange gekoppelt ist, sowie bei der die Blasstation an eine mit einer Blasgassteuerung versehene Blasgaszuführung angeschlossen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

In der US-B1-6,186,760 werden bereits ein verfahren und eine Vorrichtung zur Blasformung von Behältern beschrieben, bei der eine Reckung eines Vorformlings aus einem thermoplastischen Material unter verwendung einer Reckstange durchgeführt wird. Nach einer Behälterformung innerhalb der Blasform erfolgt ein Zurückziehen der Reckstange, ein Abschalten der Blasgaszufuhr sowie ein Öffnen der Blasform, um den geblasenen Behälter zu entnehmen.

Weitere Verfahren und Vorrichtungen zur Blasformung von Behältern unter Verwendung von Reckstangen und Blasgaszuführungen werden in der US-A-4,372,910 sowie der GB-A-1 545 799 beschrieben.

Gemäß dem Stand der Technik erfolgt eine typische Koordinierung des Blasvorganges derart, daß möglichst lange der maximale Blasdruck innerhalb des fertig geblasenen Behälters ansteht und daß ein Verbindungsventil zwischen dem Innenraum des geblasenen Behälters und einer Blasdruckversorgung erst dann geschlossen wird, wenn die Reckstange bereits wieder aus dem geblasenen Behälter zurückgezogen wurde.

Aufgabe der vorliegenden Erfindung ist es, ein Verfahren der einleitend genannten Art derart zu verbessern, daß ein verminderter Blasgasverbrauch erreicht wird.

Diese Aufgabe wird erfindungsgemäß dadurch gelöst, daß eine Zufuhr eines unter Druck stehenden Blasgases in den im Bereich der Blasform angeordneten Behälter hinein abgeschaltet wird, bevor die Reckstange einen wesentlichen Anteil ihres Rückweges aus dem Behälter hinaus zurückgelegt hat und daß im Anschluß an die Abschaltung der Blasgaszufuhr eine lediglich geringe Blasdruckabsenkung erzeugt wird, deren Ausmaß durch die Volumenvergrößerung innerhalb des Behälters als Folge des zurückziehens des in den Behälter hineinragenden Teiles der Reckstange definiert ist.

Weitere Aufgabe der vorliegenden Erfindung ist es, eine Vorrichtung der einleitend genannten Art derart zu konstruieren, daß ein reduzierter Blasluftverbrauch unterstützt wird.

Diese Aufgabe wird erfindungsgemäß dadurch gelöst, daß die Hubsteuerung derart mit der Blasgassteuerung gekoppelt ist, daß eine zuerst eine Blasgaszuführung in den Behälter hinein abschaltende und anschließend zumindest den wesentlichen Teil eines Reckstangenrückhubes durchführende Ablaufsteuerung realisiert ist und daß eine vom Reckstangenrückhub definierte geringe Druckabsenkung innerhalb des geblasenen Behälters durch eine volumenvergrößerung definiert ist, die ihrerseits durch das Volumen des in den Behälter hineinragenden Teiles der Reckstange definiert ist.

Erfindungsgemäß wurde erkannt, daß zu einem Ende des Blasvorganges eine geringfügige Blasdruckabsenkung ohne wesentlichen Einfluß auf die Qualität der geblasenen Behälter ist. Die Abschaltung der Blasdruckzuführung vor einem Zurückziehen der Reckstange aus dem Inneren des Behälters führt somit dazu, daß die aus dem Zurückziehen der Reckstange resultierende Volumenvergrößerung innerhalb des Behälters und die sich hieraus ergebende Druckabsenkung nicht durch nachströmende Blasluft kompensiert wird, sondern daß die Absenkung des innerhalb des Behälters wirksamen Blasdruckes bis zum Ende des Blasvorganges erhalten bleibt und nicht kompensiert wird. Es wird somit bei jedem Blasvorgang ein Druckluftvolumen eingespart, daß dem Volumen des in den Behälter hineinragenden Teiles der Reckstange entspricht. Dieses Volumen ergibt sich als Produkt aus der Querschnittfläche der Reckstange und dem Hubweg.

Bei der Herstellung von Behältern mit einem Inhalt von 0,75 Litern und einer üblichen Reckstangendimensionierung kann durch dieses geänderte Steuerverfahren eine Reduzierung des Blasluftverbrauchs von etwa 5 % erreicht werden. Die Durchführung des wesentlichen Teiles des Reckstangenrückhubes nach der Abschaltung des Blasdruckes umfaßt insbesondere auch ein geringfügiges Zurückziehen der Reckstange vor einer Abschaltung der Blasgaszufuhr, einen zeitlichen Überlagerungsprozeß des Abschaltvorganges der Blasgaszuführung und eines Beginns des Reckstangenhubes sowie eine unvollständige aber zumindest wesentliche Abschaltung der Blasgaszuführung.

Eine große Blasgaseinsparung wird dadurch unterstützt, daß die Blasgaszuführung vor einem Beginn des Rückhubes der Reckstange abgeschaltet wird.

Ein typisches Anwendungsgebiet wird dadurch definiert, daß in die Blasform vor einem Zurückfahren der Reckstange ein Blasdruck im Bereich von 30 bar bis 50 bar eingeleitet wird.

Gemäß einer typischen Ausführungsform ist vorgesehen, daß die Bewegung der Reckstange mindestens zum Teil mechanisch gesteuert wird.

Insbesondere ist es bei einer mechanischen Steuerung möglich, daß eine jeweilige Positionierung der Reckstange von einer Kurvensteuerung unter Verwendung einer Reckkurve gesteuert wird.

Darüber hinaus ist auch daran gedacht, daß eine Bewegung der Reckstange mindestens teilweise pneumatisch gesteuert wird.

Ebenfalls ist es möglich, daß eine Bewegung der Reckstange mindestens teilweise elektrisch gesteuert wird.

Eine kompakte und zugleich einfach steuerbare Ausführungsform wird dadurch bereitgestellt, daß die Blasgaszuführung zur Blasform von mindestens einem Ventil gesteuert wird.

Eine an unterschiedliche Anwendungsanforderungen anpaßbare Steuerung wird dadurch unterstützt, daß das Ventil elektrisch angesteuert wird.

Großtechnische Anwendungen mit einem großen Einsparpotential werden dadurch definiert, daß die Blasstation auf einem rotierenden Blasrad angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine Seitenansicht einer Blasstation, bei der eine Reckstange von einem Reckstangenträger positioniert wird.

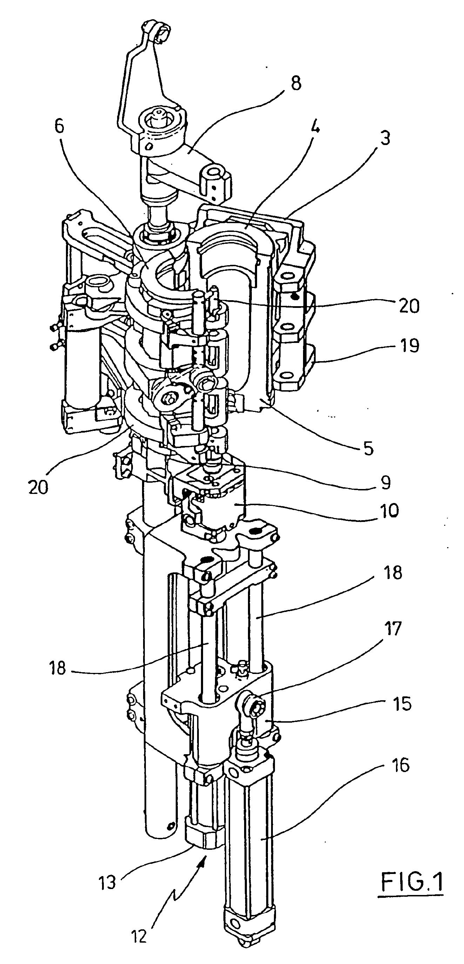

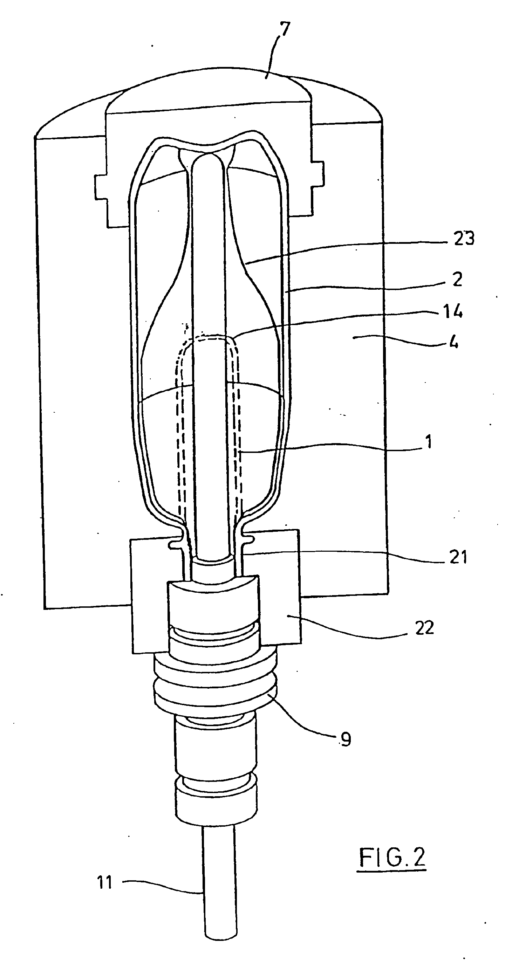

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

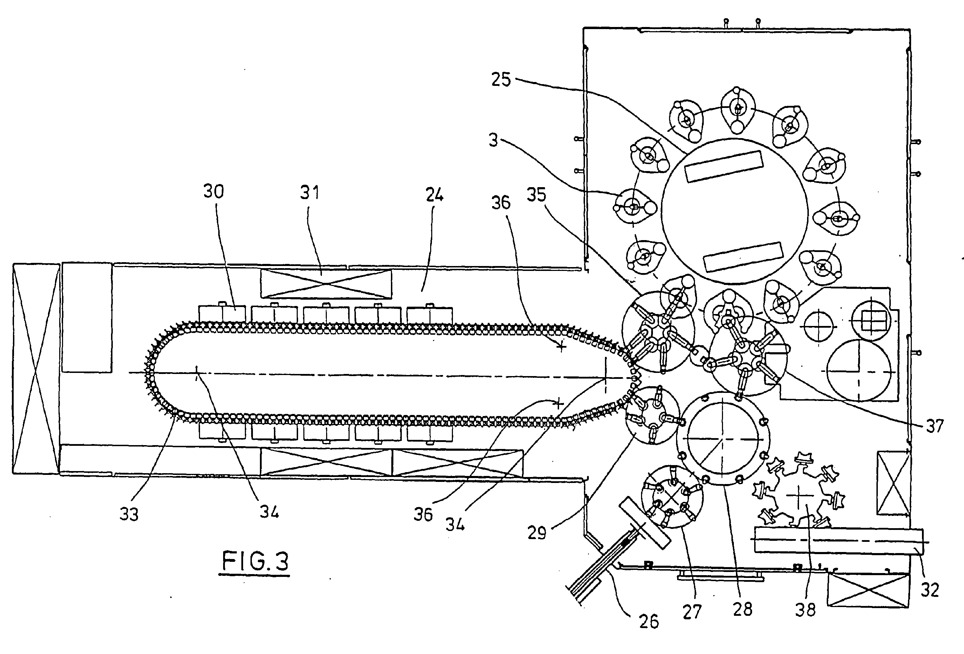

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

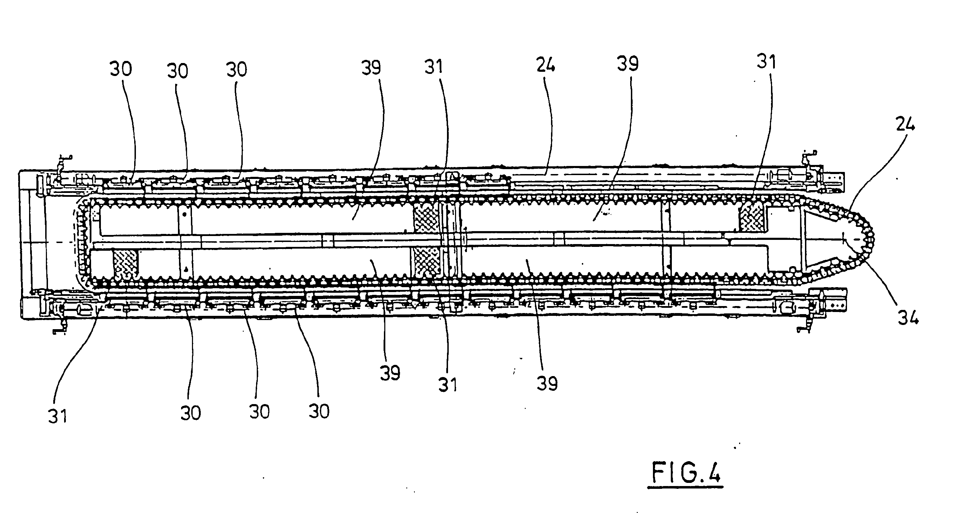

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

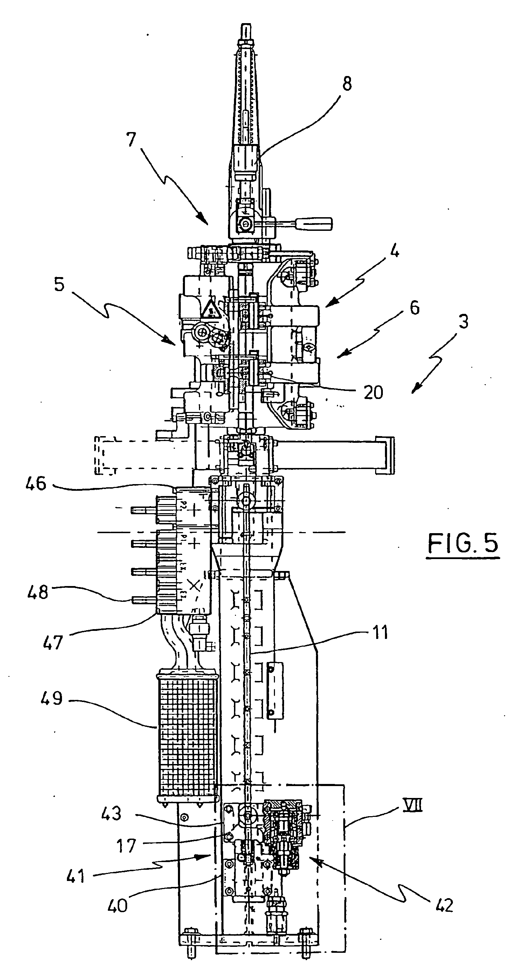

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

Eine typische Durchführung des Blasvorganges kann am einfachsten anhand von Fig. 2 veranschaulicht werden. Nach einem Einsetzen des Vorformlings (1) in die Blasform (4) und einer Verriegelung der Blasstation (3) erfolgt zunächst ein Hineinfahren der Reckstange (11) in den Vorformling (1) bei gleichzeitiger Blasdruckunterstützung derart, daß der Vorformling (1) durch die axiale Reckung nicht auf die Reckstange (11) radial aufschrumpft.

Nach der in Fig. 2 dargestellten vollständigen Durchführung des Reckvorganges erfolgt die vollständige Expansion der Behälterblase (23) in die Endkontur des Behälters (2) und der maximale Innendruck wird so lange aufrecht erhalten, bis der Behälter (2) durch Abkühlung eine ausreichende Formstabilität erreicht hat. Nach dem Erreichen dieser Formstabilität wird die Blasdruckzufuhr abgeschaltet und die Reckstange (11) wird wieder aus der Blasform (4) und somit aus dem geblasenen Behälter (2) zurückgezogen.

Als Folge der Abschaltung des Blasdruckes resultiert hieraus eine geringfügige Absenkung des Innendruckes des Behälters (2), die aufgrund der bereits erreichten Stabilität des Behälters (2) aber nicht zu einer nachteiligen Veränderung der Behälterqualität führt.

## Patentansprüche

1. Verfahren zur Blasformung von Behältern (2), bei dem ein Vorformling (1) aus einem thermoplastischem Material nach einer thermischen Konditionierung innerhalb einer Blasform (4) von einer Reckstange (11) gereckt und durch Blasdruckeinwirkung in den Behälter (2) umgeformt wird, **dadurch gekennzeichnet, daß** eine Zufuhr eines unter Druck stehenden Blasgases in den im Bereich der Blasform (4) angeordneten Behälter (2) hinein abgeschaltet wird, bevor die Reckstange (11) einen wesentlichen Anteil ihres Rückweges aus dem Behälter (2) hinaus zurückgelegt hat und daß im Anschluß an die Abschaltung der Blasgaszufuhr eine lediglich geringe Blasdruckabsenkung erzeugt wird, deren Ausmaß durch die volumenvergrößerung innerhalb des Behälters (2) als Folge des zurückziehens des in den Behälter (2) hineinragenden Teiles der Reckstange (11) definiert ist.

2. verfahren nach Anspruch 1, **dadurch gekennzeichnet, daß** die Blasgaszuführung vor einem Beginn des Rückhubes der Reckstange (11) abgeschaltet wird.

3. Verfahren nach Anspruch 1 oder 2, **dadurch gekennzeichnet, daß** in die Blasform (4) vor einem Zurückfahren der Reckstange (11) ein Blasdruck im Bereich von 30 bar bis 50 bar eingeleitet wird.

4. Verfahren nach einem der Ansprüche 1 bis 3, **dadurch gekennzeichnet, daß** die Bewegung der Reckstange (11) mindestens zum Teil mechanisch gesteuert wird.

5. Verfahren nach einem der Ansprüche 1 bis 4, **dadurch gekennzeichnet, daß** eine jeweilige Positionierung der Reckstange (11) von einer Kurvensteuerung unter Verwendung einer Reckkurve gesteuert wird.

6. Verfahren nach einem der Ansprüche 1 bis 3, **dadurch gekennzeichnet, daß** eine Bewegung der Reckstange (11) mindestens teilweise pneumatisch gesteuert wird.

7. Verfahren nach einem der Ansprüche 1 bis 3, **dadurch gekennzeichnet, daß** eine Bewegung der Reckstange (11) mindestens teilweise elektrisch gesteuert wird.

8. Verfahren nach einem der Ansprüche 1 bis 7, **dadurch gekennzeichnet, daß** die Blasgaszuführung zur Blasform (4) von mindestens einem Ventil gesteuert wird.

9. Verfahren nach Anspruch 8, **dadurch gekennzeichnet, daß** das Ventil elektrisch angesteuert wird.

10. Vorrichtung zur Blasformung von Behältern (2) aus einem thermoplastischen Material, die mindestens eine mit einer Blasform (4) versehene Blasstation (3) aufweist und die mit einer Reckeinrichtung versehen ist, in deren Bereich eine Reckstange (11) zur Beaufschlagung eines in die Blasform (4) einsetzbaren Vorformlings (1) angeordnet ist und bei der die Reckstange (11) mit einer Hubsteuerung für die Durchführung einer Bewegungskoordinierung der Reckstange (11) gekoppelt ist sowie bei der die Blasstation (3) an eine mit einer Blasgassteuerung versehene Blasgaszuführung angeschlossen ist, **dadurch gekennzeichnet, daß** die Hubsteuerung derart mit der Blasgassteuerung gekoppelt ist, daß eine zuerst eine Blasgaszuführung in den Behälter hinein abschaltende und anschließend zumindest den wesentlichen Teil eines Reckstangenrückhubes durchführende Ablaufsteuerung realisiert ist und daß eine vom Reckstangenrückhub definierte geringe Druckabsenkung innerhalb des geblasenen Behälters durch eine Volumenvergrößerung definiert ist, die ihrerseits durch das volumen des in den Behälter hineinragenden Teiles der Reckstange definiert ist.

11. Vorrichtung nach Anspruch 10, **dadurch gekennzeichnet, daß** die Reckstange (11) mit einer Kurvensteuerung gekoppelt ist.

12. Vorrichtung nach Anspruch 10, **dadurch gekennzeichnet, daß** die Reckstange (11) mit einer pneumatischen Steuerung gekoppelt ist.

13. Vorrichtung nach Anspruch 10, **dadurch gekennzeichnet, daß** die Reckstange (11) mit einer elektrischen Steuerung gekoppelt ist.

14. Vorrichtung nach einem der Ansprüche 10 bis 13, **dadurch gekennzeichnet, daß** die Blasgaszuführung eine Ventilsteuerung aufweist.

15. Vorrichtung nach einem der Ansprüche 10 bis 14, **dadurch gekennzeichnet, daß** die Blasgaszuführung mindestens ein elektrisch angesteuertes Ventil aufweist.

16. Vorrichtung nach einem der Ansprüche 10 bis 15, **dadurch gekennzeichnet, daß** die Blasstation (3) auf einem rotierendem Blasrad (25) angeordnet ist.

## Claims

1. A method of blow moulding containers (2), in which a parison (1) made from a thermoplastic material is stretched following thermal conditioning inside a blowing mould (4) by a stretching rod (11) and is shaped by the effect of blown gas to give the container (2), **characterised in that** a supply of blown gas under pressure into the container (2), which is arranged in the region of the blowing mould (4), is switched off before the stretching rod (11) has covered a substantial portion of its return travel out of the container (2), and **in that** after the supply of blown gas has been switched off only a small reduction in the blowing pressure is produced, the magnitude of the reduction being defined by the increase in volume inside the container (2) as a consequence of withdrawing the part of the stretching rod (11) which projects into the container (2).

2. A method according to Claim 1, **characterised in that** the supply of blown gas is switched off before the return stroke of the stretching rod (11) begins.

3. A method according to Claim 1 or 2, **characterised in that** a blowing pressure in the range from 30 bar to 50 bar is introduced into the blowing mould (4) before the stretching rod (11) is moved back.

4. A method according to one of Claims 1 to 3, **characterised in that** the movement of the stretching rod (11) is at least in part controlled mechanically.

5. A method according to one of Claims 1 to 4, **characterised in that** each positioning of the stretching rod (11) is controlled by a cam control, using a stretching cam.

6. A method according to one of Claims 1 to 3, **characterised in that** movement of the stretching rod (11) is at least in part controlled pneumatically.

7. A method according to one of Claims 1 to 3, **characterised in that** movement of the stretching rod (11) is at least in part controlled electrically.

8. A method according to one of Claims 1 to 7, **characterised in that** the supply of blown gas to the blowing mould (4) is controlled by at least one valve.

9. A method according to Claim 8, **characterised in that** the valve is triggered electrically.

10. A device for blow moulding containers (2) made from a thermoplastic material, which has at least one blowing station (3) which is provided with a blowing mould (4) and with a stretching device, in the region of which a stretching rod (11) is arranged for acting on a parison (1) which may be inserted into the blowing mould (4), and in which the stretching rod (11) is coupled to a stroke control for coordinating movement of the stretching rod (11), and in which the blowing station (3) is connected to a supply of blown gas provided with a blown gas control, **characterised in that** the stroke control is coupled to the blown gas control such that a sequence control is produced which first switches off a supply of blown gas into the container and then performs at least a substantial portion of a stretching rod return stroke, and **in that** a small reduction in the pressure inside the blown container, defined by the stretching rod return stroke, is defined by an increase in volume which for its part is defined by the volume of the part of the stretching rod which projects into the container.

11. A device according to Claim 10, **characterised in that** the stretching rod (11) is coupled to a cam control.

12. A device according to Claim 10, **characterised in that** the stretching rod (11) is coupled to a pneumatic control.

13. A device according to Claim 10, **characterised in that** the stretching rod (11) is coupled to an electrical control.

14. A device according to one of Claims 10 to 13, **characterised in that** the supply of blown gas has a valve control.

15. A device according to one of Claims 10 to 14, **characterised in that** the supply of blown gas has at least one electrically triggered valve.

16. A device according to one of Claims 10 to 15, **characterised in that** the blowing station (3) is arranged on a rotating blowing wheel (25).

## Revendications

1. Procédé pour le soufflage de récipients (2), dans lequel une préforme en matière thermoplastique est étirée par une barre d'étirage (11) après un conditionnement thermique à l'intérieur d'un moule de soufflage (4), et est transformée en un récipient (2) sous l'effet de la pression de soufflage, **caractérisé en ce que** l'amenée d'un gaz de soufflage sous pression dans le récipient (2), agencé dans le moule de soufflage (4), est activée avant que la barre d'étirage (11) ait effectué une partie importante de son parcours de retrait hors du récipient (2), et **en ce que**, après l'arrêt de l'amenée de gaz de soufflage, est seulement générée une faible réduction de la pression de soufflage, dont l'importance est déterminée par l'augmentation de volume à l'intérieur du récipient (2), à la suite du retrait de la partie de la barre d'étirage (11) qui est introduite dans le récipient (2).

2. Procédé selon la revendication 1, **caractérisé en ce que** l'alimentation en gaz de soufflage est arrêtée avant le début du retrait de la barre d'étirage (11).

3. Procédé selon revendication 1 ou 2, **caractérisé en ce que**, avant le retrait de la barre d'étirage (11), une pression de soufflage dans une plage de 30 bars à 50 bars, est générée dans le moule.

4. Procédé selon l'une des revendications 1. à 3, **caractérisé en ce que** le mouvement de la barre d'étirage (11) est commandé, au moins partiellement, de manière mécanique.

5. Procédé selon l'une des revendications 1 à 4, **caractérisé en ce que** chaque positionnement de la barre d'étirage (11) est commandé par un organe de commande courbe en utilisant une courbe d'étirage.

6. procédé selon l'une des revendications 1 à 3, **caractérisé en ce qu'**un mouvement de la barre d'étirage (11) est commandé, au moins partiellement, de manière pneumatique.

7. Procédé selon l'une des revendications 1 à 3, **caractérisé en ce qu'**un mouvement de la barre d'étirage (11) est commandé, au moins partiellement, de manière électrique.

8. Procédé selon l'une des revendications 1 à 7, **caractérisé en ce que** l'alimentation en gaz de soufflage du moule de soufflage (4) est commandée par au moins une soupape.

9. Procédé selon la revendication 8, **caractérisé en ce que** la soupape est commandée électriquement.

10. Procédé pour le soufflage de récipients (2) en matériau thermoplastique, qui comprend au moins un poste de soufflage (3) pourvu d'un moule de soufflage (4), et qui est pourvu d'un dispositif d'étirage, dans le domaine duquel est agencée une barre d'étirage (11), à l'action de laquelle est soumise la préforme (1) qui est placée dans le moule de soufflage (4), et dans lequel la barre d'étirage (11) est couplée à une commande de déplacement pour la réalisation d'une coordination du mouvement de la barre d'étirage (11), et dans lequel le poste de soufflage (3) est raccordé à une alimentation en gaz de soufflage pourvu d'une commande de gaz de soufflage, **caractérisé en ce que** la commande de déplacement est couplée avec la commande de gaz de soufflage de telle manière qu'une commande de déroulement de processus est réalisée, laquelle arrête d'abord une amenée de gaz de soufflage dans le récipient et exécute ensuite au moins une partie essentielle du retrait de la barre d'étirage, et **en ce qu'**une faible réduction de pression à l'intérieur du récipient, laquelle est déterminée par le retrait de la barre d'étirage, est définie par une augmentation de volume, qui, pour sa part, est définie par le volume de la partie de la barre d'étirage introduit dans le récipient.

11. Dispositif selon la revendication 10, **caractérisé en ce que** la barre d'étirage (11) est couplée avec une commande en courbe.

12. Dispositif selon la revendication 10, **caractérisé en ce que** la barre d'étirage (11) est couplée avec une commande pneumatique.

13. Dispositif selon la revendication 10, **caractérisé en ce que** la barre d'étirage est couplée avec une commande électrique.

14. Dispositif selon l'une des revendications 10 à 13, **caractérisé en ce que** la conduite d'alimentation en gaz de soufflage présente une commande à soupape.

15. Dispositif selon l'une des revendications 10 à 14 **caractérisé en ce que** la conduite d'alimentation en gaz de soufflage présente au moins une soupape à commande électrique.

16. Dispositif selon l'une des revendications 10 à 15, **caractérisé en ce que** le poste de soufflage (3) est agencé sur une tourelle de soufflage rotative (25).
